# FASCICULE DE BREVET EUROPEEN

(11) **EP 1 937 537 B1**
(45) Date de publication et mention de la délivrance du brevet: **10.03.2010**
(21) Numéro de dépôt: 06831264.4
(22) Date de dépôt: 02.10.2006
(51) Int. Cl.: B62D 21/15

(54) **STRUCTURE AVANT DU VEHICULE AUTOMOBILE ADAPTEE POUR EMPECHER L'INTRUSION D'UNE ROUE DANS L'HABITACLE EN CAS DE CHOC FRONTAL**
VORDERSTRUKTUR FÜR EIN KRAFTFAHRZEUG ZUR VERHINDERUNG DES EINDRINGENS EINES RADES IN DEN PASSAGIERRAUM IM FALLE EINES FRONTALEN AUFPRALLS
MOTOR VEHICLE FRONT STRUCTURE ADAPTED TO PREVENT INTRUSION OF A WHEEL INTO THE PASSENGER COMPARTMENT IN CASE OF FRONTAL IMPACT

(30) Priorité: 14.10.2005 FR 0510490
(43) Date de publication de la demande: 02.07.2008
(73) Titulaire: Renault SAS, 92100 Boulogne Billancourt (FR)
(72) Inventeur: VITRY, Bernard, 78990 Elancourt (FR)
(86) Numéro de dépôt international: PCT/FR2006/050978
(87) Numéro de publication internationale: WO 2007/042707

(56) Documents cités:
- EP-A- 1 270 375
- FR-A- 2 789 031
- PATENT ABSTRACTS OF JAPAN vol. 2003, no. 11, 5 novembre 2003 (2003-11-05) -& JP 2003 182643 A (NISSAN MOTOR CO LTD), 3 juillet 2003 (2003-07-03)
- PATENT ABSTRACTS OF JAPAN vol. 2003, no. 04, 2 avril 2003 (2003-04-02) -& JP 2002 356178 A (NISSAN MOTOR CO LTD), 10 décembre 2002 (2002-12-10)

## Description

La présente invention concerne une structure de la partie avant d'un véhicule automobile assurant une sécurité améliorée pour le ou les occupants du véhicule en cas de choc frontal. En cas de choc frontal, notamment dans le cas d'un véhicule automobile présentant un porte à faux avant très réduit (faible distance entre l'avant du véhicule et les roues avant), au moins l'une des deux roues avant, poussée vers l'arrière sous l'effet du choc, risque de faire intrusion dans l'habitacle et constitue ainsi un danger pour les occupants.

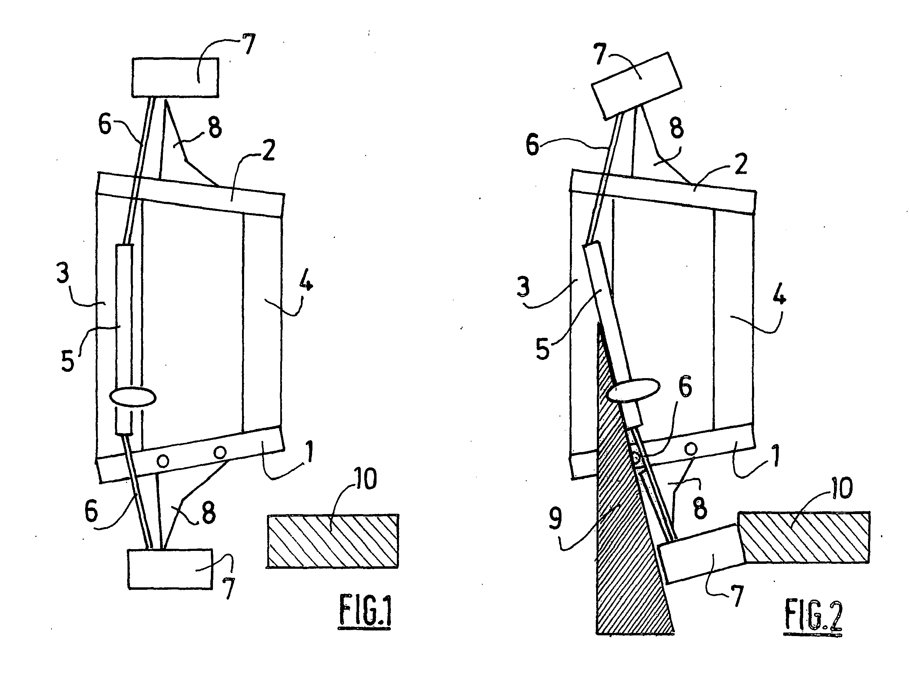

La figure 1 des dessins annexés est une vue en plan schématique d'une structure classique de la partie avant d'un véhicule automobile. Cette structure comporte un berceau constitué par deux longerons 1, 2 reliés entre eux par une traverse avant 3 et une traverse arrière 4. La traverse avant 3 supporte la crémaillère de direction 5 qui comporte à chacune de ses extrémités une biellette 6 reliée de façon articulée à une roue avant 7 du véhicule. Chacun des longerons 1, 2 porte un triangle de suspension 8 relié à une roue 7 du véhicule. En cas de choc frontal du véhicule (voir figure 2 des dessins annexés) contre un objet 9, affectant le côté avant gauche du véhicule, la crémaillère de direction 5 est poussée vers l'arrière. Le triangle de suspension 8 de la roue gauche s'incline vers l'arrière. La roue 7 pivote et son côté arrière vient heurter le bavolet 10 qui est situé à la partie inférieure du passage de roue.

En fonction de l'importance du choc, la roue 7 risque de faire intrusion à l'intérieur de l'habitacle du véhicule et blesser les occupants.

Le but de la présente invention est de limiter un tel risque.

Le document JP2003182643 décrit une structure de la partie avant d'un véhicule selon le préambule de la revendication 1.

Suivant l'invention, la structure de la partie avant d'un véhicule automobile, comportant un berceau constitué par deux longerons reliés entre eux par une traverse avant et une traverse arrière, la traverse avant supportant la crémaillère de direction qui comporte à chacune de ses extrémités une biellette reliée de façon articulée à une roue avant du véhicule, chacun des longerons portant un triangle de suspension relié à une roue du véhicule est **caractérisée en ce que** chacun des longerons est adapté pour pouvoir se déformer, en cas de choc frontal du véhicule, de façon à former un coude dont la convexité est dirigée vers l'extérieur du véhicule pour que le triangle de suspension s'incline vers l'arrière et que la roue pivote vers l'extérieur de façon que l'arrière de celle-ci se dégage du passage de roue.

Ainsi, la déformation du longeron permet à la roue de se dégager du passage de la roue, de sorte qu'elle ne risque pas de faire intrusion à l'intérieur de l'habitacle.

Selon une version préférée de l'invention, chacun des longerons comprend une partie avant reliée à la traverse avant et une partie arrière reliée à la traverse arrière, ces parties du longeron étant reliées l'une à l'autre et à la traverse correspondante par une liaison formant une rotule plastique de façon à former ledit coude, en cas de choc frontal.

Ces "rotules plastiques" peuvent être réalisées de différentes façons, qui seront précisées plus loin.

Pour que la déformation du longeron puisse se faire dans de bonnes conditions, il est avantageux que le triangle de suspension de la roue soit fixé à la partie arrière du longeron.

D'autres particularités et avantages de l'invention apparaîtront encore tout au long de la description ci-après.

Aux dessins annexés, donnés à titre d'exemples non limitatifs:
la figure 3 est une vue analogue à la figure 1, la structure comportant un longeron modifié selon l'invention,
la figure 4 est une vue montrant le comportement de la structure selon la figure 3 en cas de choc frontal.

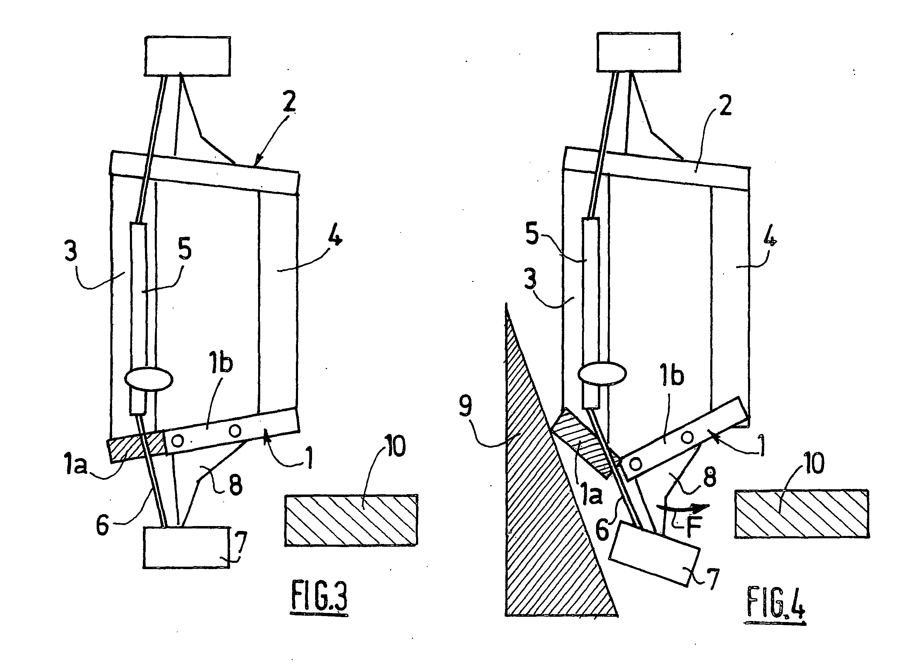

Dans la réalisation selon l'invention, montrée sur la figure 3, le longeron 1 de la structure avant du véhicule a été modifié pour pouvoir se déformer, en cas de choc frontal du véhicule, de la manière illustrée par la figure 4.

Cette figure 4 montre que sous l'effet du choc contre l'objet 9, le longeron 1 se déforme sous la forme d'un coude dont la convexité est dirigée vers l'extérieur. Du fait de ce coude, le triangle de suspension s'incline vers l'arrière dans le sens de la flèche F, et la roue 7 tirée par la biellette 6, pivote vers l'extérieur et sa partie arrière se dégage du passage de roue, c'est-à-dire du bavolet 10.

Dans l'exemple montré sur les figures 3 et 4, le longeron 1 comprend une partie avant 1a reliée à la traverse avant 3 et une partie arrière 1b reliée à la traverse arrière 4. Chacune de ces parties 1a, 1b du longeron est reliée à l'autre partie et à la traverse 3 ou 4 correspondante par une liaison formant une rotule plastique de façon à former le coude défini plus haut, en cas de choc frontal.

Il existe ainsi pour chaque longeron trois rotules plastiques: l'une, au niveau de la liaison de la partie 1a avec la traverse 3, la deuxième, au niveau de la jonction entre les deux parties 1a et 1b et la troisième, au niveau de la liaison entre la partie 1b et la traverse arrière.

Par rotule plastique, on désigne tout type d'assemblage ou de liaison entre deux parties, pouvant sous l'effet d'une force prédéterminée exercée dans la direction des deux parties, céder et provoquer une rotation angulaire entre les deux parties.

De telles liaisons formant rotule plastique peuvent être réalisées de diverses façons, en elle-même connues par l'homme du métier.

Dans l'exemple représenté sur les figures 3 et 4, la liaison formant rotule plastique entre la partie arrière 1b et la partie avant 1a du longeron est située en avant du triangle de suspension 8.

En effet, la partie 1b du longeron est elle-même difficilement déformable du fait de l'assemblage rigide réalisé avec le triangle de suspension.

## Revendications

1. Structure de la partie avant d'un véhicule automobile, comportant un berceau constitué par deux longerons (1, 2) reliés entre eux par une traverse avant (3) et une traverse arrière (4), la traverse avant supportant la crémaillère de direction (5) qui comporte à chacune de ses extrémités une biellette (6) reliée de façon articulée à une roue avant (7) du véhicule, chacun des longerons (1, 2) portant un triangle de suspension (8) relié à une roue (7) du véhicule, chacun des longerons (1, 2) étant adapté pour pouvoir se déformer, en cas de choc frontal du véhicule, de façon à former un coude dont la convexité est dirigée vers l'extérieur, **caractérisé en ce que** véhicule pour que le triangle de suspension (8) s'incline vers l'arrière et que la roue (7) tirée par la biellette correspondante pivote vers l'extérieur de façon que l'arrière de celle-ci se dégage du passage de roue de sorte qu'elle ne risque pas de faire intrusion à l'intérieur de l'habitacle du véhicule.

2. Structure selon la revendication 1 **caractérisée en ce que** chacun des longerons (1, 2) comprend une partie avant (1a) reliée à la traverse avant (3) et une partie arrière (1b) reliée à la traverse arrière (4), ces parties (1a, 1b) du longeron étant reliées l'une à l'autre et à la traverse (3, 4) correspondante par une liaison formant une rotule plastique de façon à former ledit coude, en cas de choc frontal.

3. Structure selon la revendication 2, **caractérisée en ce que** le triangle de suspension (8) de la roue (7) est fixé à la partie arrière (1b) du longeron.

4. Structure selon la revendication 3, **caractérisée en ce que** la liaison formant une rotule plastique entre la partie arrière (1b) et la partie avant (1a) du longeron est située en avant du triangle de suspension (8).

## Claims

1. Structure for the front part of a motor vehicle, comprising a cradle consisting of two side rails (1, 2) joined together by a front cross-member (3) and a rear cross-member (4), the front cross-member supporting the steering rack (5) which at each of its ends comprises a link rod (6) connected in an articulated fashion to a front wheel (7) of the vehicle, each of the side rails (1, 2) bearing a wishbone (8) connected to one wheel (7) of the vehicle, each of the side rails (1, 2) being designed to be able to deform, in the event of the vehicle experiencing a frontal impact, in such a way as to form an elbow the convex face of which faces toward the outside **characterized in that** vehicle so that the wishbone (8) is angled backward and so that the wheel (7) pulled by the corresponding link rod, pivots outward so that the rear of this wheel comes clear of the wheel arch so that there is no risk of its protruding into the vehicle interior.

2. Structure according to Claim 1, **characterized in that** each of the side rails (1, 2) comprises a front part (la) connected to the front cross-member (3) and a rear part (1b) connected to the rear cross-member (4), these parts (la, 1b) of the side rail being joined together and joined to the corresponding cross-member (3, 4) by a connection that forms a plastic hinge so as to form said elbow in the event of a frontal impact.

3. Structure according to Claim 2, **characterized in that** the wishbone (8) used to suspend the wheel (7) is fixed to the rear part (1b) of the side rail.

4. Structure according to Claim 3, **characterized in that** the connection that forms a plastic hinge between the rear part (1b) and the front part (la) of the side rail is located forward of the wishbone (8).

## Patentansprüche

1. Vorderbaustruktur für ein Kraftfahrzeug, mit einem aus zwei Längsträgern (1, 2), die durch einen vorderen Querträger (3) und einen hinteren Querträger (4) miteinander verbunden sind, bestehenden Gestell, wobei der vordere Querträger die Lenkungszahnstange (5) stützt, die an jedem ihrer Enden eine gelenkig mit einem Vorderrad (7) des Fahrzeugs verbundene Stange (6) aufweist, wobei jeder der Längsträger (1, 2) einen mit einem Rad (7) des Fahrzeugs verbundenen Dreieckslenker (8) trägt, wobei jeder der Längsträger (1, 2) so ausgeführt ist, dass er sich bei einem frontalen Aufprall des Fahrzeugs verformen kann, so dass ein Bogen gebildet wird, dessen Konvexität zur Außenseite gerichtet ist " **dadurch gekennzeichnet, dass** Fahrzeug, damit sich der Dreieckslenker (8) nach hinten neigt und das von der entsprechende Stange gezogene Rad (7) nach außen schwenkt, so dass sich sein hinterer Teil von dem Radkasten löst und so nicht Gefahr läuft, in das Innere der Fahrgastzelle einzudringen.

2. Struktur nach Anspruch 1, **dadurch gekennzeichnet, dass** jeder der Längsträger (1, 2) einen mit dem vorderen Querträger (3) verbundenen Vorderteil (la) und einen mit dem hinteren Querträger (4) verbundenen Hinterteil (1b) umfasst, wobei diese Teile (la, 1b) des Längsträgers durch eine Verbindung miteinander und mit dem entsprechenden Querträger (3, 4) verbunden sind, die ein plastisches Gelenk bildet, um den Bogen bei einem frontalen Aufprall zu bilden.

3. Struktur nach Anspruch 2, **dadurch gekennzeichnet, dass** der Dreieckslenker (8) des Rads (7) an dem Hinterteil (1b) des Längsträgers befestigt ist.

4. Struktur nach Anspruch 3, **dadurch gekennzeichnet, dass** sich die ein plastisches Kugelgelenk zwischen dem Hinterteil (1b) und dem Vorderteil (la) des Längsträgers bildende Verbindung vor dem Dreieckslenker (8) befindet.
